Europäisches Patentamt

European Patent Office

Office européen des brevets

(19)

(11) Veröffentlichungsnummer: **0 438 033 A1**

## (12) EUROPÄISCHE PATENTANMELDUNG

(21) Anmeldenummer: 90811039.8

(22) Anmeldetag: 28.12.90

(51) Int. Cl.5: **B29C 67/14**, F16C 15/00, F16F 15/30

(30) Priorität: 13.01.90 CH 101/90

(43) Veröffentlichungstag der Anmeldung:
24.07.91 Patentblatt 91/30

(84) Benannte Vertragsstaaten:
DE FR GB IT

(71) Anmelder: SUTER & CO
Holeestrasse 107
CH-4054 Basel(CH)

(72) Erfinder: Suter, Alois, Dipl.-Ing.ETH
Im Holeeletten 29
CH-4054 Basel(CH)

(74) Vertreter: Fenner, Werner, Dipl.-Ing.
Patentanwalt Hofacher 374
CH-5425 Schneisingen(CH)

(54) Verfahren zur Herstellung von Rotationskörpern aus vornehmlich heisshärtenden Harzen und Vorrichtung zur Durchführung desselben.

(57) Bei der Herstellung von Rotationskörpern aus Polymeren bzw. Verbundwerkstoffen wird das verwendete Gewebeband vorerst zu einer mehrlagigen Wicklung geformt, im Formhohlraum eines rotierend antreibbaren Formwerkzeuges oder mittels separatem Wickelapparat, und hernach in dem Formhohlraum mit einem flüssigen Harzsystem getränkt bzw. umgossen und einem Aushärtungsprozess ausgesetzt.

Auf diesem Weg wird das Harzsystem über eine Abeckplatte (3) in ein aus letzterer, einer benachbarten Bodenplatte (4) und einem zwischen diesen eingespannten Formrahmen (5) gebildeten, aufheizbaren Formwerkzeug (1), in dessen Formhohlraum (2) sich die Wicklung aus Gewebeband befindet, zugeführt und zu einem Formkörper ausgehärtet.

Fig. 1

# VERFAHREN ZUR HERSTELLUNG VON ROTATIONSKÖRPERN AUS VERBUNDWERKSTOFFEN UND VORRICHTUNG ZUR DURCHFÜHRUNG DESSELBEN.

Die Erfindung bezieht sich auf ein Verfahren nach dem Ober begriff des Patentanspruches 1.

Rotationskörper als Schwungräder, Turbinen, Zentrifugen, in der Medizinaltechnik oder auf anderen Gebieten hoher Drehzahl-Anforderungen, wurden unlängst aus Stahl- und Stahllegierungen hergestellt.

Aufgrund der grossen Rotationsmassen ist aus Sicherheitsgründen eine entsprechende Dimensionierung, die zu hohen Belastungen in den Rotationslagern und hohen Kosten führt, erforderlich.

Daneben bemisst sich die Leistungsfähigkeit eines Schwungrades oder Rotationskörpers nach seiner Energiedichte, d.h. nach der maximalen speicherbaren Energiemenge im Verhältnis zur Masse des Rotors, wobei die Energiedichte direkt von der Randgeschwindigkeit des Rotors abhängig ist und nicht etwa von der Grösse des Rotors, dessen Energieinhalt im Quadrat der Drehzahl wächst.

Diese Gesetzmässigkeit wird dort bedeutend, wo für den Einsatz eines Schwungrades nur wenig Raum zur Verfügung steht und daher hohe Drehzahlen anzustreben sind.

Die Forschungsgruppe Enegiespeicherung des Institutes für elektrische Maschinen der ETH Zürich entwickelte in einer Arbeitsgemeinschaft Rotationskörper aus Faserverbundstoffen, die bei richtiger Dimensionierung und Konstruktion wesentlichsicherer sind. Nach Angaben einer speziellen Broschüre ermöglichen diese Werkstoffe aufgrund ihrer höheren Festigkeitswerte einen höheren Energieinhalt und lassen sich mit mehrfacher Schallgeschwindigkeit antreiben. Daneben sind sie kompakter als die bisherigen und sie sind einfacher zu lagern.

Unter diesen Voraussetzungen wurde eine Bandwickelmaschine für hochbeanspruchte Faserverbund-Rotationskörper bis maximal 1000 mm Durchmesser und 700 mm axiale Länge entwickelt. Als Fasergewebeband wird ein unidirektionales Band aus hochzugfesten Glas-, Polyamid- oder Kohlefasern mit kontrollierter Vorspannung eingesetzt.

Die Herstellung der Faserverbundrotoren erfolgt nach dem Bandwickelverfahren und erfordert spezielle Fasergewebebänder, die auf einer Bandwebemaschine gewoben und anschliessend auf einer Bandwickelmaschine verarbeitet werden. Das Band wird mit Epoxydharz getränkt und mit variabler Vorspannung direkt auf eine Metallnabe gewickelt.

Als Anwendung dieser Rotoren gelten die bekannten Möglichkeiten wie Energiespeicherung, Energiebereitstellung in der Stromversorgung, Medizinaltechnik, bei Werkzeugmaschinen, Verbrennungsmotoren und Turbinen sowie die Herstellung chemischer Produkte.

Dieses bekannte Verfahren erfordert einen hohen Aufwand an Einrichtungen, Steuerungs- und Kontrollgeräten, sowie Energie. Zudem ist bei dem bekannten Nass-Wickel-Verfahren der Rotationskörper nach dem Aushärten zu überdrehen, um die durch das Wickeln entstandenen Unwuchten abzubauen. Bei diesem Vorgang kommt es vor, dass das Gewebeband und somit der Verbundwerkstoff in seinem bedeutendsten Bereich verletzt wird.

Aufgabe der vorliegenden Erfindung ist es somit, ein Verfahrenzu schaffen, mit welchem die Herstellung von Rotationskörpern aus Verbundwerkstoffen einfacher, präziser und mit einem geringeren Aufwand als bisher vorgenommen werden kann.

Erfindungsgemäss wird diese Aufgabe dadurch gelöst, dass eine aus mehreren übereinander angeordneten Lagen trockenen Gewebebandes bestehende Wicklung in dem Hohlraum eines Formwerkzeuges mit flüssigem Harz getränkt und umgossen bzw. vergossen wird.

Dabei wird das Gewebeband vorerst in gleichmässigen Lagen zu einer Wicklung gefertigt und sodann als Träger der danach durch Spritzgiessen zugeführten Epoxydharzmasse bzw. eines Polymers, das bei Raumtemperatur (Temperaturzunahme zur Polymerisation) bis ca. 200° C aushärtet, verwendet.

Eine durch eine geeignete Feuchtigkeit vor dem Spritzgiessen benetzte Wicklung kann sich vorteilhaft auf die Fliessfähigkeit des zuströmenden Harzes auswirken. Eine solche Massnahme steht jedoch nur unterstützend im Zusammenhang mit der Erfindung.

Der entscheidende Vorteil dieser Vorgehensweise liegt zweifellos in der wirtschaftlich interessanten Herstellung von schnellaufenden Rotoren, deren mechanische Beständigkeit erheblich verbessert wird. Dies bewirkt einen potenteren Energieinhalt durch höhere Drehzahlen.

Die Wirtschaftlichkeit dieses Verfahrens kann dadurch verbessert werden, dass das flüssig zugeführte Harz oder Harzsystem, beispielsweise angereichert mit Füllstoffen, parallel zu den durch die Wicklungen des Gewebebandes gebildeten Lagen in den Hohlraum eingespritzt wird. Diese Massnahme erweist sich als zeitsparend bei der Abwicklung des Verfahrens, indem die zur Durchsetzung des Harzes in dem mit einem Einlegekeil versehenen Formhohlraum auf direkten, geraden Pfaden erfolgen kann.

Zur Erzielung einer gleichmässigen Wicklung kann eine bestehende Nabe, um die das Gewebeband aufgedreht wird, als Wickelansatz günstige Dienste erweisen.

Der Wickelvorgang auf eine Spule bzw. Nabe kann bei rotierendem Formwerkzeug im Formhohlraum oder auch auf einer separaten Wickeleinrichtung erfolgen, wobei letzterenfalls die Wicklung danach in den Formhohlraum eingebaut/eingelegt wird.

Durch die stirnseitig betrachtet wabenartige Gestalt der Wicklung neigt die zu vergiessende Masse zur Bildung von die Qualität der Formkörper mindernden Lufteinschlüssen, sodass der Giess- oder Spritzgiessvorgang vorteilhaft bei evakuiertem Hohlraum erfolgen sollte.

Die Einrichtung zur Durchführung des erfindungsgemässen Verfahrens besteht aus einem mehrteiligen ggf. rotierend antreibbaren Formwerkzeug, das in einer Schliesseinheit einer Spritzgiess- bzw. Giessmaschine eingespannt wird. Dieses an Aufspannplatten befestigte Formwerkzeug besitzt jeweils eine zur Zuführung des Harzes in den Formhohlraum bestimmte Abdeckplatte und eine zur Entgasung des Formhohlraumes vorgesehene Bodenplatte, die mit einem dazwischenliegenden Formrahmen einen Formhohlraum bilden, der zur Aufnahme einer aus Gewebeband geformten Wicklung ausgebildet ist. Dieser Formrahmen weist zur Herstellung von Rotationskörpern eine kreisrund verlaufende Wand auf.

Zu diesem Zweck kann im Kreiszentrum eine zur Zentrierung der Wicklung angeordnete Anspannvorrichtung vorgesehen sein.

Letztere kann als eine die Abdeck- und die Bodenplatte duchsetzende Welle aufweisen, die gleichzeitig die Drehachse eines zu formenden Rotationskörpers bildet oder der Lagerung einer in der Wicklung vorkommenden Nabe dient.

Die Welle kann alternativ der Andordnung einer mit der Abdeck- und der Bodenplatte dicht verbundenen Spule bzw. Nabe dienen, die den Formhohlraum von der Welle trennt.

Ebenso weist der Formrahmen seitliche Dichtungen oder einen seitlich an der Abdeck- und der Bodenplatte dicht anliegenden, lösbaren Innenring auf. Selbstverständlich könnte der Formrahmen als Ring ausgebildet sein.

Als geeignet bei der Ausbildung eines Formwerkzeuges erweist sich an der Rückseite der Deckplatte eine dicht anliegende Verteilerplatte, die eine die Harzquelle mit dem Formhohlraum verbindende Leitung aufweist, und bei welchem Formwerkzeug an der Rückseite der Bodenplatte eine dicht anliegende, eine den Formhohlraum mittels Leitung mit einer Austrittsöffnung verbindende Sammelplatte vorgesehen ist.

Die an der Rückseite der Deckplatte vorgesehene Leitung ist zweckmässig durch eine sich in der Verteilerplatte radial, etwa über die Breite des ringförmigen Formrahmens, bis annähernd an den Rand der Deckplatte erstreckenden Nut gebildet.

Zur Verbindung der Nut mit der Harzquelle eignet sich insbesondere ein die Deckplatte am Ende der Nut durchsetzender Zutrittskanal.

Selbstverständlich wäre die Harzzufuhr auch über eine Bohrung in der Verteilerplatte möglich, wobei eine solche Ausführung Konsequenzen bei der Ausbildung der Aufspann- und/oder Heizplatte hinter der Verteilerplatte auslösen würde.

Als Deckplatte erweist sich eine Ausführungsform als besonders vorteilhaft, wenn erstere über der in der Verteilerplatte vorgesehenen Nut mehrere voneinander beabstandete, sich in den Formhohlraum durchsetzende Kanäle aufweist, die in an der dem Formhohlraum zugewandten Seite der Deckplatte angeordnete Ringnuten münden, wodurch auf einfache Weise ein kurzer Förderweg der Masse und eine günstige Verteilung erreichbar sind.

Zur Vermeidung von Gaseinschlüssen ist es vorzüglich, wenn die der Rückseite der Bodenplatte zugekehrte Seite der Sammelplatte die Leitung bildende Ringnunten aufweist, die in einen sich radial erstreckenden Sammelkanal münden, der über eine die Bodenplatte durchsetzende Bohrung mit einer Austrittsöffnung verbunden ist. Selbstverständlich wäre auch auf dieser Seite des Formwerkzeuges eine Entgasung des Formhohlraumes über eine mit der Aufspannplatte kommunizierenden Bohrung in der Sammelplatte funktionsfähig, jedoch mit den dazu erforderlichen konstruktiven Aufwendungen.

Deshalb können die Ringnuten der Sammelplatte mit den in der Bodenplatte verteilt angeordneten und in den Formhohlraum mündenden Entgasungsbohrungen leitungsverbunden sein.

Bei einem kreisrunden Formhohlraum erweist sich die Anordnung der Entgasungsbohrungen auf mehreren kozentrischen Umkreisen verteilt bezüglich Gleichmässigkeit, Festigkeit und zur Fertigung als günstig.

Zur Vereinfachung der Sammelplatte sind die auf wenigstens zwei benachbarte Umkreise verteilten Entgasungsbohrungen einer Ringnut zugeordnet und zur Beschleunigung der Entgasung ist die Bodenplatte zwischen wenigstens zwei Umkreisen mit jeweils einer ringförmig verlaufenden flachen Vertiefung versehen.

Eine einfache Ausbildung der Zutrittsöffnung bzw. Leitungsführung des Harzes in das Formwerkzeug bzw. der Austrittsöffnung des aus dem Formwerkzeug entweichenden Gases lässt sich durch jeweils einen am Umfang des Formrahmens befestigten Mündungs- bzw. Austrittsstutzen realisieren, deren Leitungsabschnitte an den Zutrittskanal in der Deckplatte bzw. an die Bohrung in der Sammelplatte anschliessen.

Da die Bohrungen zur Entgasung des Formhohlraumes auf die Bodenplatte verteilt angeordnet sind, können der Mündungs- und Austrittsstutzen sich gegenüberliegend am Formrahmen angeordnet sein.

Auch erweist sich als vorteilhaft, wenn der Formrahmen aus wenigstens zwei lösbar verbundenen Segmenten gebildet ist, wodurch die Handhabung und Verwendbarkeit begünstigt werden.

Zur Schonung des Arbeitsplatzes ist die Austrittsleitung des Gases aus dem Formwerkzeug an einen Abscheider angeschlossen.

Zur Herstellung von Rotationskörpern nach dem eingangs erwähnten Verfahren könnte dem Formwerkzeug einer Spritzgiess-oder Giessmaschine eine Wickeleinrichtung zugeordnet werden, wobei das Formwerkzeug mit einem Drehantrieb ausgebildet oder eine separat angetriebene Wickeleinrichtung an der Spritzgiess- oder Giessmaschine zur Herstellung oder Wicklung vorgesehen ist.

Bei einer rationellen Serienfertigung von Schwungrädern resp. Rotationskörpern würde sich eine steuerbare Verbindung zwischen Wickelmaschine und Spritzgiess- oder Giessmaschine eignen, bei welcher jeweils die eine Einrichtung auf den Arbeitstakt der anderen abzustimmen ist. Da z.Z. das Vergiessen der Wicklung in dem Formwerkzeug mit einem höheren Zeitaufwand verbunden ist, wäre die Fabrikation der Wicklung darauf abzustimmen. Selbstverständlich könnten auch mehrere Spritzgiess- oder Giessmaschinen zur Herstellung der Rotationskörper verwendet werden.

Zur Automatisierung der Herstellung von Rotationskörpern ist es zweckmässig, wenn das Formwerkzeug durch eine Beschickungsvorrichtung mit der Wickeleinrichtung oder einem Zwischenlager für Wicklungen verbunden ist.

Gleichzeitig könnte die Entgasungsleitung zwischen Formhohlraum und Austrittsöffnung wenigstens eine gasdurchlässige Filtriereinrichtung, beispielsweise ein sog. Vlies, zur Aufnahme von über die Entlüftung entweichendem Harz bzw. Verbundstoff, aufweisen.

Nachstehend sind die verfahrensmässige Erfindung und der Erfindungsgegenstand anhand eines in der Zeichnung dargestellten Ausführungsbeispiels näher erläutert. Es zeigen :

Fig. 1 einen Querschnitt durch das erfindungsgemässe Formwerkzeug,

Fig. 2 einen Längsschnitt durch das Formwerkzeug nach der Linie II - II in Fig. 1,

Fig. 3 einen Längsschnitt durch das Formwerkzeug nach der Linie III-III in Fig. 1 und

Fig. 4 eine vergrösserte Darstellung des Details A in Fig. 1.

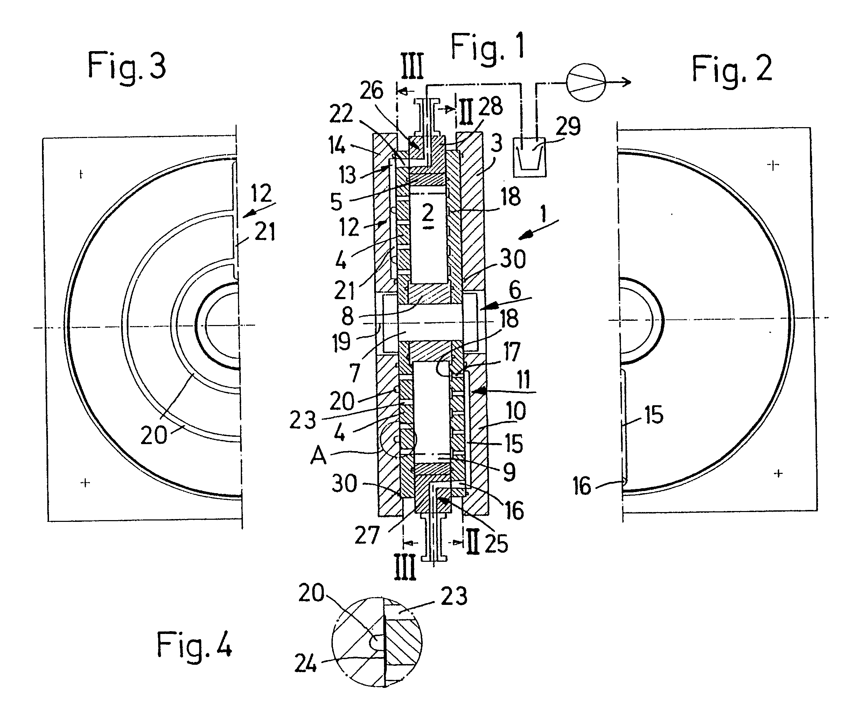

Fig.1 veranschaulicht ein Formwerkzeug 1 zur Herstellung von Rotationskörpern aus vornehmlich heisshärtenden Polymeren bzw. Harzen wie beispielsweise Epoxy, in welches ein um eine Rotationsachse gewickeltes bzw. gewickelte Gewebeband bzw. Gewebebänder unerschiedlicher Qualität und Materialien als Wicklung ausgebildet, eingelegt wird. Die in Lagen gewickelten Gewebebänder weisen im Bedarfsfalle verschiednene Gewebe auf; so werden beispielsweise nach aussen hin engere Abstände zwischen Schuss- und Kettfaden, also eine höhere Zerreissfestigkeit gefordert. Daneben werden Harze mit verschiedenen Füllstoffen vergossen, wobei schon das Gefüge eines Rotationskörpers von verschiedenartigen Radialschichten des Harzsystems , - / Aramid-, Kohlenstoff- und/oder Glasfaserschicht-, gebildet sein kann.

Dabei wird die aus mehreren übereinander angeordneten Lagen des trockenen Gewebebandes geformte Wicklung in dem Hohlraum 2 des Formwerkzeuges 1 mit flüssigem, unter Druck zugeführtem Harz getränkt bzw. umgossen. Das Harz bzw. Harzsystem (Harz und Füllstoffe) wird an der Stirnseite parallel zu den Lagen der Wicklung dem Formhohlraum zugeführt und in diesem verteilt.

Die Bildung der Wicklung des Gewebebandes erfolgt auf einer Spule oder Nabe, die später im Rotationskörper verbleibt.

Der Wickelvorgang wird bei rotierendem Formwerkzeug 1 durchgeführt.

Selbstverständlich könnte die Wicklung auch ausserhalb des Formwerkzeuges 1 auf einem Wickelapparat vorgenommen werden.

Zweckmässigerweise erfolgt der Wickelvorgang jedoch mit dem Formwerkzeug 1 das eine zur Zuführung des Werkstoffes in den Formhohlraum bestimmte Abdeckplatte 3 und eine zur Entgasung des Formhohlraumes 2 vorgesehene Bodenplatte 4 mit einem im Umfangsbereich dieser Platten 3,4 dazwischenliegenden Formrahmen 5 aufweist. Dieser Formrahmen 5, der auswechselbar ist, bestimmt die Grösse bzw. den Durchmesser des Rotationskörpers resp. Schwungrades. Im vorliegenden Fall ist der Formrahmen 5 ringförmig und die Abdeck- 3 und Bodenplatte 4 sind kreisrund ausgebildet. Die zum Formrahmen 5 konzentrische Drehachse ist als Aufspannvorrichtung 6 der Wicklung oder als Spule bzw. Nabe ausgebildet. Die Aufspannvorrichtung 6 weist eine die Abdeck- 3 und die Bodenplatte 4 durchsetzende Welle 7 auf, auf welcher eine mit der Abdeck- 3 und der Bodenplatte 4 dicht verbundene Spule oder Nabe 8 drehbar lagert. Letztere dient der Wicklung und kann sowohl im Formwerkzeug als auch ausserhalb von dem Gewebeband belegt werden.

An der Innenwand des Formrahmens 5 ist durch eine strichpunktierte Linie ein Innenring 9 erkennbar, der zur Fertigung verschiedene Durchmesser aufweisender Formkörper austauschbar ausgebildet ist.

Zu dieser Ausrüstung gehört eine an der Rückseite der Deckplatte 3 dicht anliegende Verteilerplatte 10, die eine die Harz-Quelle (nicht sichtbar) mit dem Formhohlraum 2 verbindende Leitung 11, und eine an der Rückseite der Bodenplatte 4 dicht anliegende, den Formhohlraum 2 mittels Leitung 12 mit einer Austrittsöffnung 13 des entweichenden Gases verbindende Sammelplatte 14.

Die Wicklung im Formhohlraum 2 kann sowohl mit als auch ohne Verteiler- 10 und Sammelplatte 14 hergestellt werden.

Dabei ist die an der Rückseite der Deckplatte 3 vorgesehene Leitung 11 durch eine sich in der Verteilerplatte 10 radial bis annähernd zum Rand der Deckplatte 3 erstreckende Nut 15 ausgebildet. Die Leitung 11 wird am äusseren Ende der Nut 15 durch einen die Deckplatte 3 durchsetzenden Zutrittskanal 16 fortgesetzt. Die Deckplatte 3 selbst weist über der in der Verteilerplatte 10 angeordneten Nut mehrere voneinander beabstandete, sich in den Formhohlraum 2 durchsetzende Kanäle 17 auf, die in an der dem Formhohlraum 2 zugewandten Seite der Deckplatte 3 vorgesehene Ringnuten 18 münden. Letztere verlaufen in konzentrischen Kreisbogen zu der Drehachse 19.

An der Rückseite der Bodenplatte 4 befindet sich in der Sammelplatte 14 eine Leitung 12 aus Ringnuten 20, die in einen sich radial erstreckenden Sammelkanal 21 münden, der durch eine die Bodenplatte 4 durchdringende Bohrung 22 mit der Austrittsöffnung 13 verbunden ist. Die Ringnuten 20 in der Sammelplatte 14 sind mit den in der Bodenplatte 4 verteilt angeordneten und in den Formhohlraum 2 mündenden Entgasungsbohrungen 23 leitungsverbunden. Die Entgasungsbohrungen 23 in der Bodenplatte 4 sind auf mehreren konzentrischen Teilkreisen verteilt angeordnet.

In den Fig.1 und 4 sind die auf wenigstens zwei benachbarten Teilkreisen verteilten und jeweils einer Ringnut 20 zugeordneten Entgasungsbohrungen 23 erkennbar. Alternativ ist zu diesem Zweck eine zwischen den Entgasungsbohrungen 23 ringförmig verlaufende flache Vertiefung 24 in der Bodenplatte 4 vorgesehen, die auch als sog. Filmentlüftung bezeichnet werden kann.

Die Zutrittsöffnung 25 des Harzes in das Formwerkzeug wie auch die Austrittsöffnung 26 befinden sich in einem am Umfang des Formrahmens 5 befestigten, sich gegenüberliegenden Mündungs- 27 und Austrittsstutzens 28.

Der Formrahmen 5 besteht aus wenigstens zwei voneinander lösbaren Segmenten, damit eine einfache Montage des Formwerkzeuges 1 nach dem Wickeln der Gewebebänder möglich ist. Selbstverständlich wäre ein allenfalls zu verwendender Innenring 9 ebenfalls mehrteilig auszubilden. Eine einteilige Gestaltung des Formrahmens 1 und des Innenringes 9 hätte eine Demontage des Formwerkzeuges 1 nach dem Wickeln zur Folge bzw. würde den Einbau vorgefertigter Wicklungen gestatten.

Zur Meidung in die Atmosphäre austretender Gase aus dem Formhohlraum 2, ist die Austrittsöffnung 26 an einen Abscheider 29 oder Filter angeschlossen, der auch Festteile zurückhält. Im übrigen handelt es sich bei der in der Fig.1 vorkommenden Bezugszahl 30 um Dichtungen, bzw. Dichtungsringe auf deren Ausbildung wegen ihrer Bekanntheit nicht eingegangen wird.

## Patentansprüche

1.  Verfahren zur Herstellung von Rotationskörpern aus vornehmlich in heisshärtenden Harzen wie Epoxydharzen oder dgl. getränkten und um eine Rotationsachse gewickelten Gewebeband bzw. -bändern bestehenden Verbundwerkstoffen, dadurch gekennzeichnet, dass eine aus mehreren übereinander angeordneten Lagen trockenen Gewebebandes bestehende Wicklung in dem Formhohlraum eines Formwerkzeuges mit flüssigem Harz getränkt und umgossen bzw. vergossen wird.

2.  Verfahren nach Anspruch 1, dadurch gekennzeichnet, dass das flüssige Harz parallel zu den Lagen der Wicklung und stirnseitig zu letzterer dem Formhohlraum zugeführt wird.

3.  Verfahren nach einem der Ansprüche 1 und 2, dadurch gekennzeichnet, dass das trockene Gewebeband zur Bildung der Wicklung auf eine Spule bzw. Nabe gewickelt wird.

4.  Verfahren nach einem der Ansprüche 1 bis 3, dadurch gekennzeichnet, dass der Wickelvorgang bei rotierendem Formwerkzeug im Formhohlraum erfolgt.

5.  Verfahren nach einem der Ansprüche 1 bis 3, dadurch gekennzeichnet, dass das Spritzgiessen bzw. Giessen der Harzmasse bei evakuiertem Formhohlraum erfolgt.

6.  Formwerkzeug zur Durchführung des Verfahrens nach einem der Ansprüche 1 bis 5, dadurch gekennzeichnet, dass jeweils eine zur Zuführung des Harzes in den Formhohlraum (2) bestimmte Abdeckplatte (3) und eine zur Entgasung des Formhohlraumes (2) vorgesehene Bodenplatte (4) mit einem dazwischenliegenden Formrahmen (5) einen Formhohlraum (2) bilden, der zur Aufnahme einer aus Gewebeband geformten Wicklung ausgebildet ist.

7.  Formwerkzeug nach Anspruch 6, dadurch gekennzeichnet, dass der Formhohlraum (2) zwischen den Platten (3,4) kreisrund ausgebildet ist und eine im Kreiszentrum angeordnete Aufspannvorrichtung (6) oder Spule bzw. Nabe (8) aufweist.

8. Formwerkzeug nach einem der Ansprüche 6 und 7, dadurch gekennzeichnet, dass die Aufspannvorrichtung (6) oder Spule bzw. Nabe (8) eine die Platten (3,4) durchsetzende Welle (7) aufweist.

9. Formwerkzeug nach einem der Ansprüche 5 bis 8, dadurch gekennzeichnet, dass die Welle (7) zur Drehlagerung einer mit der Abdeck-(3) und Bodenplatte (4) dicht verbundenen Spule bzw. Nabe (8) vorgesehen ist.

10. Formwerkzeug nach einem der Ansprüche 6 bis 9, dadurch gekennzeichnet, dass der kreisrund ausgebildete Formrahmen (5) einen seitlich dicht an den Platten (3,4) anliegenden lösbaren Innenring (9) aufweist.

11. Formwerkzeug nach einem der Ansprüche 6 bis 10, dadurch gekennzeichnet, dass an der Rückseite der Deckplatte (3) eine dicht anliegende Verteilerplatte (10) angeordnet ist, die eine die Harz-Quelle mit dem Formhohlraum (2) verbindende Leitung (11) aufweist, und dass an der Rückseite der Bodenplatte (4) eine dicht anliegende, den Formhohlraum (2) mittels Leitung (12) mit einer Austrittsöffnung (13) verbindende Sammelplatte (14) vorgesehen ist.

12. Formwerkzeug nach einem der Ansprüche 6 bis 12, dadurch gekennzeichnet, dass die an der Rückseite der Deckplatte (3) vorgesehene Leitung, (11) durch eine sich in der Verteilerplatte (10) radial bis annähernd an den Rand der Deckplatte (3) erstreckende Nut (15) gebildet ist.

13. Formwerkzeug nach einem der Ansprüche 6 bis 12, dadurch gekennzeichnet, dass das äussere Ende der Nut (15) mit einem die Deckplatte (3) durchsetzenden Zutrittskanal (16) verbunden ist.

14. Formwerkzeug nach einem der Ansprüche 6 bis 13, dadurch gekennzeichnet, dass die Deckplatte (3) über der in der Verteilerplatte (10) vorgesehenen Nut (15) mehrere voneinander beabstandete, sich in den Formhohlraum (2)durchsetzende (17) Kanäle aufweist, die in an der dem Formhohlraum (2) zugewandten Seite der Deckplatte (3) angeordnete Ringnuten (18) münden.

15. Formwerkzeug nach einem der Ansprüche 6 bis 11, dadurch gekennzeichnet, dass die der Rückseite der Bodenplatte (4) zugekehrte Seite der Sammelplatte (14) die Leitung bildende Ringnuten (20) aufweist, die in einen sich radial erstreckenden Sammelkanal (14) münden, der durch eine die Bodenplatte (4) durchsetzende Bohrung (22) mit der Austrittsöffnung (13) verbunden ist.

16. Formwerkzeug nach Anspruch 15, dadurch gekennzeichnet, dass die Ringnuten (20) der Sammelplatte (14) mit den in der Bodenplatte (4) verteilt angeordneten und in den Formhohlraum (2) mündenden Entgasungsbohrungen (23) leitungsverbunden sind.

17. Formwerkzeug nach einem der Ansprüche 15 und 16, dadurch gekennzeichnet, dass die Entgasungsbohrungen (23) der Bodenplatte (4) auf mehreren Teilkreisen verteilt angeordnet sind.

18. Formwerkzeug nach einem der Ansprüche 15 bis 17, dadurch gekennzeichnet, dass die auf wenigstens zwei benachbarte Teilkreise verteilten Entgasungsbohrungen (23) einer Ringnut (20) zugeordnet sind.

19. Formwerkzeug nach Anspruch 18, dadurch gekennzeichnet, dass die einer Ringnut (20) zugeordneten Entgasungsbohrungen (23) durch eine in der Bodenplatte (4) ringförmig verlaufende flache Vertiefung (24) gebildet ist.

20. Formwerkzeug nach einem der Ansprüche 11 bis 19, dadurch gekennzeichnet, dass die Zutrittsöffnung (25) des Harzes bzw. die Austrittsöffnung (13) des entweichenden Gases in jeweils einem am Umfang des Formrahmens (5) befestigten Mündungsstutzen (27) bzw. Austrittsstutzen (28) vorgesehen ist.

21. Formwerkzeug nach Anspruch 20, dadurch gekennzeichnet, dass die beiden Stutzen (27,28) am Formrahmen (5) sich gegenüberliegend angeordnet sind.

22. Formwerkzeug nach einem der Ansprüche 6 bis 21, dadurch gekennzeichnet, dass der Formrahmen (5) aus wenigstens zwei lösbar verbundenen Segmenten gebildet ist.

23. Formrahmen nach einem der Ansprüche 6 bis 22, dadurch gekennzeichnet, dass die Austrittsöffnung (13) in eine Abscheidevorrichtung (29) mündet.

24. Anlage zur Herstellung von Rotationskörpern aus Verbundwerkstoffen nach einem der Ansprüche 1 bis 5, mittels eines Formwerkzeuges einer Spritzgiessmaschine, dadurch gekennzeichnet, dass der Spritzgiessmaschine eine Wickeleinrichtung zur Herstellung der Wicklung zugeordnet ist.

25. Anlage nach Anspruch 24, dadurch gekennzeichnet, dass die Wickeleinrichtung mit den Arbeitszyklen der Spritzgiessmaschine steuerbar verbunden ist.

26. Anlage nach einem der Ansprüche 24 und 25, dadurch gekennzeichnet, dass das Formwerkzeug durch eine Beschickungsvorrichtung mit der Wickeleinrichtung bzw. einem Zwischenlager verbunden ist.

# Fig. 3

# Fig. 1

# Fig. 2

# Fig. 4

EP 0 438 033 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | K. VAN HARTEN: "Collegedictaat vezelversterkte kunststoffen I49 B", Juli 1988, Seite 155, Vakgroep Vezeltechniek, Werktuigbouw, Technische Universiteit Delft, Delft, NL<br>* Seite 150, Zeilen 24-31; Figur 30 *<br>— — — | 1-3,5-7, 10,12,13, 22-26 | B 29 C 67/14<br>F 16 C 15/00<br>F 16 F 15/30 |
| Y | TECHNISCHE RUNDSCHAU, Band 78, Nr. 14, April 1986, Seiten 20-23, Bern, CH; J. WIDMER et al.: "Herstellung einer neuen Generation von Schwundgrädern aus Faserverbundwerkstoffen"<br>* Seite 22, Spalte 2, Zeile 3 - Seite 23, Spalte 2, Zeile 32; Figuren 5,8,9 *<br>— — — | 1-3,5-7, 10,12,13, 22-26 | |
| A | US-A-4 849 150 (HIROKAZU KITTAKA)<br>* Zusammenfassung; Spalte 1, Zeile 60 - Spalte 2, Zeile 4; Figuren *<br>— — — | 1-9,22 | |
| A | WO-A-8 603 268 (ASPER)<br>* Ansprüche 1-12; Zusammenfassung *<br>— — — — — | 1 | |

**RECHERCHIERTE SACHGEBIETE (Int. Cl.5)**

B 29 C
F 16 F
F 16 C

Der vorliegende Recherchenbericht wurde für alle Patentansprüche erstellt

| Recherchenort | Abschlußdatum der Recherche | Prüfer |
|---|---|---|
| Den Haag | 23 April 91 | VAN WALLENE A.M.A. |